# EUROPEAN PATENT SPECIFICATION

(11) **EP 2 199 710 B1**
(45) Date of publication and mention of the grant of the patent: **21.09.2011**
(21) Application number: 09179715.9
(22) Date of filing: 17.12.2009
(51) Int. Cl.: F25B 45/00

(54) **Tank**
Behälter
Réservoir

(30) Priority: 18.12.2008 IT TO20080950
(43) Date of publication of application: 23.06.2010
(73) Proprietor: Texa S.p.A., Monastier di Treviso (IT)
(72) Inventor: Vianello, Bruno, 31056 Roncade (IT)
(74) Representative: Jorio, Paolo

(56) References cited:
- JP-A- 2000 292 032
- US-A- 3 795 262
- US-A1- 2007 125 443

## Description

The present invention relates to the charging of a refrigerant fluid in a vehicle air-conditioning system.

In particular, the present invention relates to a system for charging a refrigerant fluid in a vehicle air-conditioning system, which comprises a charging station of the type comprising: a refrigerant fluid suction/injection circuit connectable to the refrigerant circuit of the air-conditioning system so as to extract a residual amount of refrigerant fluid from said circuit or, alternately, to inject a nominal amount of refrigerant fluid into said refrigerant circuit; and a recovery unit, connected to the suction/injection circuit and structured so as to separate from the refrigerant fluid that is recovered any water molecules or residual oil circulating in the refrigerant circuit so that they can be stored in a relative collection vessel.

The refrigerant fluid suction/injection circuit described above also comprises a charging tank that contains a predefined amount of oil to be injected into the vehicle air-conditioning system during the charging operation in order to lubricate and/or to indicate leaks/breakages in the refrigerant circuit.

As is known in the charging stations of the type described above, before charging the refrigerant fluid, oil, for example lubricating oil, is injected into the refrigerant circuit of the air-conditioning system to lubricate the various devices arranged along the refrigerant circuit.

It is also known that the lubricating oil stored in said charging tank is very hygroscopic. Thus each time oil is injected from the charging tank into the suction/injection circuit, the oil that remains inside said tank tends to absorb a certain amount of moisture from the air that is present in the free space inside the tank, previously taken up by the oil.

It is important to point out that the presence of moisture in the lubricating oil means that, when the refrigerant circuit is charged, water is injected into the air-conditioning system. This condition is extremely harmful in that, in the presence of high temperatures and high pressure, the traces of water react chemically with the refrigerant fluid creating corrosive acids that seriously damage the refrigerant circuit of the air-conditioning system and/or the relative devices.

The need is therefore felt to produce a charging station provided with an oil charging tank that is structured so as to limit moisture contamination of the oil.

US 3795262A discloses a dispensing device and method for introducing fluids into high pressure systems and more particularly to such a device and method for introducing a fluid dehydrant into high pressure refrigeration systems for chemically drying and deicing the refrigerant. The method and apparatus is characterized by the provision of a squeeze bottle container of the fluid to be introduced into the refrigeration system. The squeeze bottle includes a discharge section made of a material sufficiently strong to withstand the pressure of the refrigeration system, at least a portion of the discharge section being flexible yet resilient enough to return to its original shape when released; a pair of one-way check valves in the discharge section to permit flow of fluid from the bottle and through the discharge section, one valve being adjacent the squeeze bottle outlet and the second valve being adjacent the outlet of the discharge; and a threaded fitting on the discharge section adapted to connect to the charging fitting of the refrigeration system or as preferred, to a standard charging hose.

The purpose of the present invention is thus to provide a charging station for a refrigerant fluid in a vehicle air-conditioning system provided with an oil charging tank, that is structured so as to prevent contact between the oil to be injected into the air-conditioning system and the environmental moisture in the air.

According to the present invention there is provided a charging tank containing the oil for use in a vehicle air-conditioning system, as claimed in claim 1 and preferably, but not necessarily, in any one of the claims depending directly or indirectly on claim 1.

According to the present invention there is also provided a system to charge the refrigerant fluid in an air-conditioning system, as claimed in claim 15 and preferably, but not necessarily, in any one of the claims depending directly or indirectly on claim 15.

According to the present invention there is also provided a charging station for a refrigerant fluid in a vehicle air-conditioning system, as claimed in claim 18.

The present invention will now be described with reference to the accompanying drawings, which illustrate a non-limiting embodiment therecf, in which:
- figure 1 is a schematic view of a system to charge a refrigerant fluid in a vehicle air-conditioning system, according to the present invention;
- figure 2 is a schematic view of a charging tank connectable to the charging station of the refrigerant fluid of the system illustrated in figure 1;
- figure 3 illustrates a first alternative embodiment of the charging tank shown in figure 2;
- figures 4-7 are schematic views of the charging tank, each showing a different phase of deformation of the oil containment bag;
- figure 8 is a schematic view of an operation to fill the charging tank shown in the previous figures;
- figure 9 illustrates a second alternative embodiment of the charging tank produced according to the present invention; and
- figures 10-13 are schematic views of the charging tank shown in figure 9, each showing a different phase of deformation of the oil containment bag.

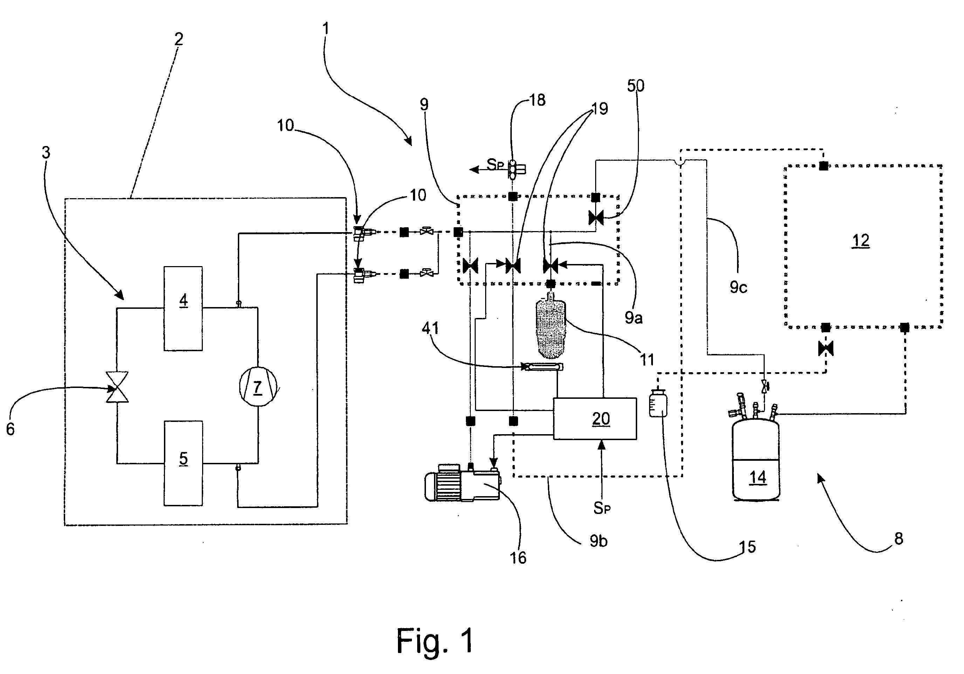

With reference to figure 1, designated as a whole by number 1 is a charging system for a vehicle air-conditioning system.

In particular, the vehicle air-conditioning system, indicated by number 2, essentially comprises a refrigerant circuit 3 along which there are arranged a condenser 4, an evaporator 5, an expansion valve 6 and a compressor 7 operable to make a refrigerant mixture flow through the refrigerant circuit 3, said refrigerant mixture consisting of a refrigerant fluid and a given amount of oil, in particular lubricating oil, for the purpose of lubricating the mechanical parts (not illustrated) of said compressor 7. The vehicle air-conditioning system 2 is of the known type and is not described in detail here.

The charging system 1 of a vehicle air-conditioning system is preferably, but not necessarily, also structured to recycle and re-use the refrigerant fluid and comprises a charging station 8, which is operable to be connected to the vehicle air-conditioning system 2 and is able to implement the operations of suction/injection of the refrigerant mixture into said vehicle air-conditioning system 2. In particular the charging station 8 is operable to extract a remaining amount of the refrigerant mixture present in the vehicle air-conditioning system 2 so as to completely empty it and after completely emptying it, to inject a nominal amount of oil preferably, but not necessarily, lubricating oil, and a nominal amount of refrigerant fluid into the vehicle air-conditioning system 2.

In the example shown in figure 1, the charging station 8 comprises a suction/injection circuit 9 having a pair of connectors 10 connectable to corresponding connectors of the refrigerant circuit 3, at least one oil charging tank 11 designed to be connected stably but in an easily releasable manner to the suction/injection circuit 9 by means of a duct 9a, and a unit for recovering the refrigerant mixture 12, which is connected to the suction/injection circuit 9 via a duct 9b and filters the refrigerant mixture to separate the refrigerant fluid from the lubricating oil in order to store these in a refrigerant container 14 and respectively, in an oil recovery container 15.

The charging station 8 also comprises at least one pump 16 connected to the suction/injection circuit 9 to regulate the suction or injection pressure of the fluid flowing through said circuit during the refrigerant fluid charging operation; a sensor 18 that measures the pressure Sₚ of the fluid flowing in the suction/injection circuit 9, and a series of fluid shut-off devices 19, for example valves, arranged along the suction/injection circuit 9 to open/close sections of the ducts of said circuit on the basis of respective electric control signals generated by an electronic control unit 20.

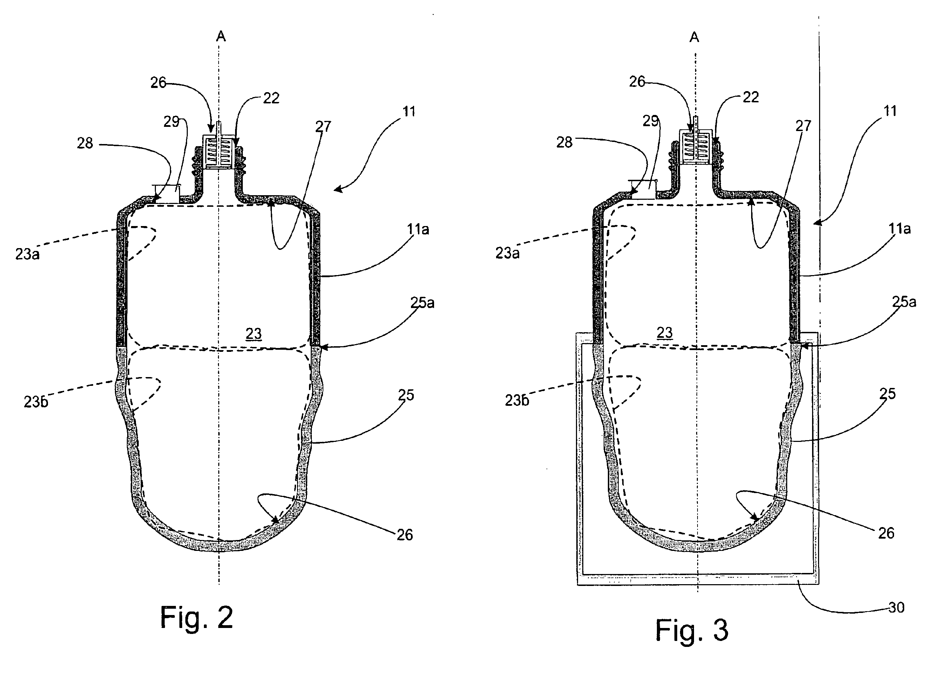

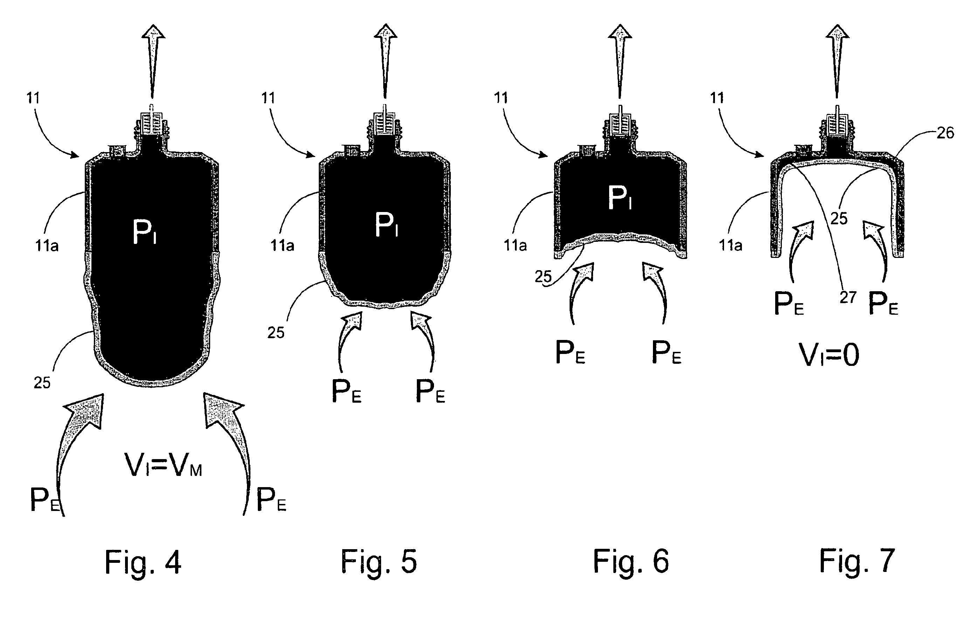

With reference to the example shown in figures 2 and 4, the oil charging tank 11 has a mouth or opening 22 which is structured so as to be coupled stably but in an easily releasable manner to the duct 9a of the suction/injection circuit 9, and an inner variable volume chamber 23 containing the lubricating oil to be injected into the air-conditioning system 2 during the charging operations.

In particular, the lubricating oil charging tank 11 is shaped so as to comprise a substantially rigid cup-shaped body 11a which extends along a longitudinal axis A and internally defines a first oil containing portion 23a (indicated by the broken line in figures 2 and 3) of the inner variable volume chamber 23.

The lubricating oil charging tank 11 is also shaped so as to comprise a bag 25, made of an easily deformable material, for example plastic or rubber or any other similar deformable material, which is stably coupled to the cup-shaped body 11a so as to internally define a second oil containing portion 23b (indicated by the broken line) of the inner chamber 23, and is structured to deform, under the effect of a difference in pressure ΔP=P_{E}-P_{I} between the pressure P_{E} of the fluid outside the chamber 23 and the pressure P_{I} of the fluid inside said chamber, so as to collapse towards the cup-shaped body 11a and be arranged at least partially within the first portion 23a of the inner chamber 23.

More specifically, the cup-shaped body 11a of the lubricating oil charging tank 11 is made of a substantially rigid material such as plastic or vitreous material or metal or any other similar rigid material, and is provided centrally with a connecting opening 22 that is preferably but not necessarily internally fitted with a unidirectional valve 26 operating between a closed position in which the inner variable volume chamber 23 is hermetically sealed, and an open condition, in which the lubricating oil is able to flow out of the tank 11 through the opening 22.

In the example illustrated in figure 2, the unidirectional valve 26 is for example a check valve comprising a central duct that connects the chamber 23 with the outside, a disc movably mounted in a seat obtained in the central duct, and a spring capable of pressing the disc against a base of the seat so as to hermetically seal the duct.

In the example shown in figure 2, the perimeter edge 25a of the bag 25 is hermetically sealed to the perimeter edge of the cup-shaped body 11a so as to internally define with the latter the inner variable volume chamber 23.

More in detail, the bag 25 is designed to deform between a condition of maximum expansion, (illustrated in figure 4) in which the oil containing volume Vᵢ of the chamber (23) corresponds to a maximum containment volume V_{M}=Vᵢ of the tank 11, and a condition of minimum containment (illustrated in figure 7) in which the oil containing volume V_{I} in the chamber (23) is substantially null, i.e. V_{I}=0.

In this case, in the minimum containment condition (shown in figure 7), the bag 25 is completely deformed within the first portion 23a of the chamber 23 so as to be arranged with its inner face 26 resting completely on the inner face 27 of the cup-shaped body 11a so that the inner containment volume V_{I} of the chamber 23 is substantially null.

In the example shown in figures 2-7, the dimensions of the bag 25 are such that the area of its inner face 26 is greater than or equal to the area of the inner face 27 of the cup-shaped body 11a.

More in detail, according to a possible embodiment, the dimensions of the cup-shaped body 11a and of the bag 25 may be such that, in the condition of maximum expansion, they have the same inner volume Vᵢ.

According to the embodiment shown in figure 3, the bag 25 is housed inside a protective container 30 made of a substantially rigid material, which is coupled to the cup-shaped body 11a so as to form therewith a single rigid body.

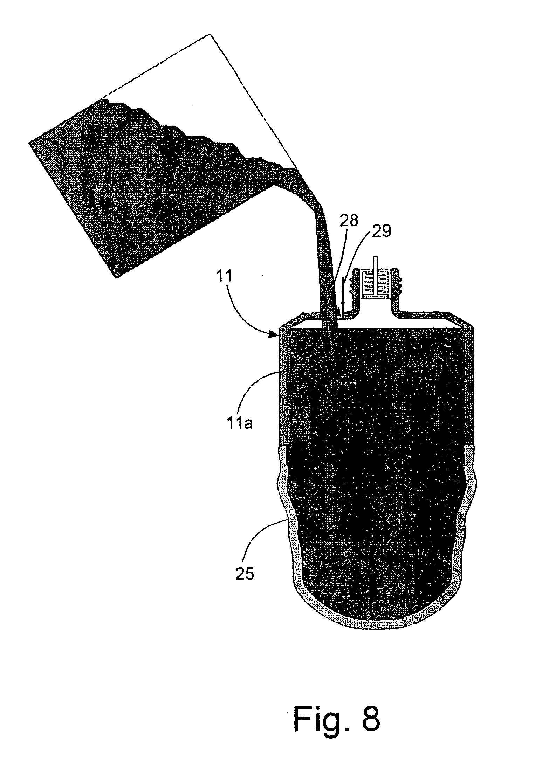

In the example shown in figure 8, the cup-shaped body 11a is also provided with an oil filling opening 28 which is hermetically sealed by a closing element 29, for example a cap connected stably but in an easily releasable manner to said opening 28 of the tank 11 to allow, in use, the addition or topping-up of oil in said charging tank 11.

The charging system 1 injects the lubricating oil contained in the charging tank 11 connected to the suction/injection circuit 9 into the refrigerant circuit 3.

In particular, the charging system 1 may comprise a step of emptying the refrigerant mixture contained in the refrigerant circuit 3, followed by a step of injecting a nominal amount of oil and a nominal amount of refrigerant fluid into the air-conditioning system 2.

During the emptying step, the charging system 1 keeps the chamber 23 of the tank 11 closed, i.e. it cuts off the connection between the latter and the suction/injection circuit 9 to prevent any lubricating oil from leaking out of the tank 11 towards the suction/injection circuit 9. Said condition may preferably but not necessarily be obtained by sending a command to close a fluid shut-off device 19 arranged along the duct 9a.

In this phase the electronic control unit 20 controls the opening of fluid shut-off devices 19 and activates the recovery unit 12 so as to create a depression within the injection/suction circuit 9 which causes the refrigerant mixture in the air-conditioning system 2 to be extracted by said recovery unit 12.

During extraction, the recovery unit 12 filters the refrigerant mixture to separate the refrigerant fluid and the residual lubricating oil so that these can be poured into the containment vessel 14 and, respectively, into the oil recovery container 15.

At the end of the extraction step the system implements the charging operation, which consists, in turn, of the steps of injecting the lubricating oil, and of injecting the refrigerant fluid into the refrigerant circuit 3.

In particular, during the step of injecting lubricating oil, the charging station 8 creates, by means of the pump 16, a depression in the refrigerant circuit 3, connecting the inner variable volume chamber 23 of the tank 11 with the suction/injection circuit 9, achieved for example by opening the fluid shut-off device 19 arranged along the duct 9a.

In this step the external atmospheric pressure P_{E} that acts on the bag 25 is greater than the internal pressure P_{I} to which the lubricating oil in the chamber 23 is exposed and thus exerts a pushing force on the bag 25, which it deforms towards the cup-shaped body 11a (as illustrated in figures 5-7). The bag 25 thus gradually deforms so as to follow the reduction in the volume of the chamber 23 and at the same time expels the lubricating oil from the tank 11 towards the suction/injection circuit 9.

The amount of lubricating oil expelled from the tank 11 and injected by the suction/injection circuit 9 into the air-conditioning system 2 is controlled by the electronic control unit 20 which controls the closing of the fluid shut-off device 19 preferably but not necessarily as a function of measurement signals sent by a sensor 55 to measure the weight of the tank 11 and by pressure signals S_{P}.

It is worth noting that the oil is expelled from the tank 11 conveniently thanks to the difference in pressure ΔP to which the bag 25 is subjected, and thus without the use of any additional manually or automatically operated mechanical blowing device to push/blow the oil from the tank 11 towards the suction/injection circuit 9.

In addition to the above it is also worth noting that the possibility of the bag collapsing and deforming completely 25 within the cup-shaped body 11 allows all of the oil in the tank 11 to be expelled without the use of any floating/immersion member in the chamber 23 (as illustrated in figure 7). The presence of a floating member in the chamber 23, besides making the tank 11 more complex to produce and preventing the bag 25 from resting completely on the inner face 27 of the cup-shaped body 11a, and thus setting the containment volume V_{I} to zero, would also be extremely disadvantageous in that a residual amount of oil would remain in the chamber 23.

When the oil injection step is complete, the electronic control unit 20 controls the opening of the valve 50 of a duct 9c that connects the suction/injection circuit 9 with the containment vessel 14 in order to cause the injection of the refrigerant fluid into the air-conditioning system 2.

From the above description it is worth noting that the tank 11 could be designed to contain oil mixed with a UV-tracing additive designed to be injected into the air-conditioning system to identify any leaks in the refrigerant circuit 3, or any similar type of oil.

The system described above is advantageous in that the use of said oil charging tank allows the oil to be injected into the air-conditioning system in a completely automatic manner without the need for any manual operations to be performed by the user to expel the oil from said tank.

Moreover, the tank described above, thanks to its configuration which envisages the use of the deformable bag, significantly reduces the risk of the oil being contaminated by external environmental humidity. The deformation caused by the external pressure on the bag completely prevents the possibility of air bubbles forming inside the chamber so that there is no risk of the oil being contaminated by the moisture in the air.

Moreover the simplified structure of the tank, without immersion/floating members inside the chamber, allows the bag to complete its deformation within the cup-shaped body and to expel all of the oil in the tank.

In other words, as it deforms the bag advantageously pushes the oil out and completely empties the tank.

Lastly, it is clear that modifications and variations may be made to the system described and illustrated herein without departing from the scope of the present invention.

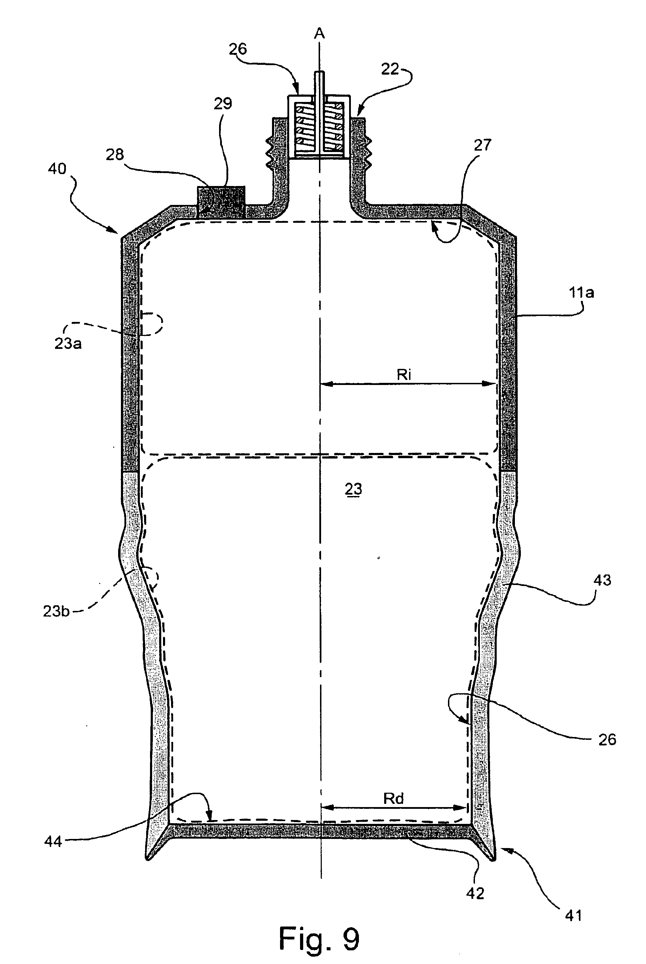

In particular, the embodiment illustrated in figures 9-13 relates to an oil charging tank 40, which is similar to the oil charging tank 11 and in which, where possible, the components are designated using the same reference numbers used to designate the corresponding components of said oil charging tank 11.

The charging tank 40 differs from the oil charging tank 11 in that its bag 41 is shaped so as to have a bottom portion 42 made of rigid material, which is designed to progressively move within said cup-shaped body 11a, under the force of the difference in pressure ΔP=P_{E}-P_{I}, so as to reduce the inner containment volume V_{I} and act as a piston to expel the oil contained in the tank 40.

In particular the bottom portion 42 in rigid material has an upper surface 44 that is shaped so as to have a shape complementary to the inner face 27 of the cup-shaped body 11a so that it can be arranged totally resting thereon.

In the example illustrated in figure 9, the upper face 44 of the bottom portion 42 of the bag 41 is substantially flat and is arranged substantially perpendicular to the longitudinal axis A.

In particular, the bag 41 is shaped so as to have a deformable side portion 43, while the bottom portion 42 preferably, but not necessarily, comprises a disc of rigid material, which is connected to the deformable portion 43 of the bag 41 and is shaped so as to have a radius R_{d} less than or equal to the radius Rᵢ of the first portion 23a of the inner chamber 23 of the cup-shaped body 11a.

More in detail in the example illustrated in figure 9, the disc made of rigid material defining the bottom portion 42 is arranged coaxially to the longitudinal axis A and has its external perimeter edge connected stably to the deformable portion 43 so as to form with the latter the bag 41.

It is however important to note that according to a possible alternative embodiment (not illustrated) the bottom portion 42 could be completely integrated into the bottom end of the deformable portion 43 of the bag 41 so as to form with the latter a single body.

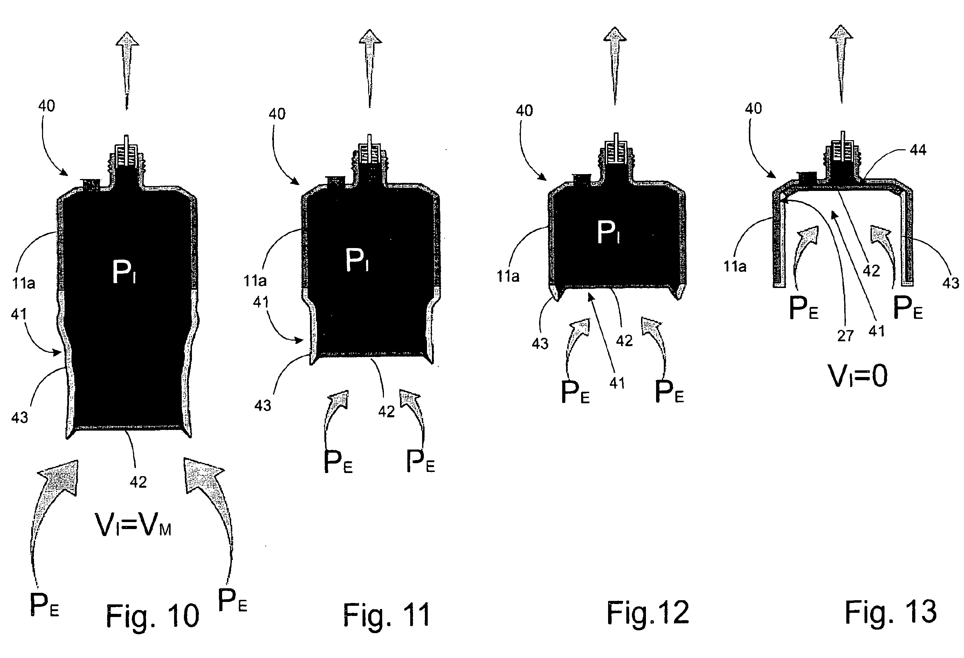

In use, under the effect of the difference in pressure ΔP=P_{E}-P_{I}, the disc made of rigid material is designed to progressively move along the longitudinal axis A between a condition of maximum expansion (shown in figure 10) in which the containment volume Vᵢ of the chamber 23 corresponds to the maximum containment volume V_{M}=Vᵢ of the tank 40, and a condition of minimum containment(shown in figure 13) in which the containment volume V_{I} of the chamber is substantially null, i.e. V_{I}=0.

In this case, in the condition of minimum containment (shown in figure 13), the bag 41 deforms so that the relative flat bottom portion 42, i.e. the disc, is arranged completely within the first portion 23a of the chamber 23 so that the upper face 44 is completely resting on the inner face 27 of the cup-shaped body 11a making the inner containment volume V_{I} of the chamber 23 substantially null. In this phase (illustrated in figure 13) the side portion 43 deforms so as to rest on the inner side face of the cup-shaped body 11a to reduce the inner containment volume V_{I} of the chamber 23 to a value that is substantially null.

## Claims

1. A tank (11) (40) couplable to a charging station for a refrigerant fluid (8) in a vehicle air-conditioning system (2), comprising an inner variable volume chamber (23) containing oil designed to be mixed with the refrigerant fluid circulating in said vehicle air-conditioning system (2); said tank (11) (40) being **characterized in that** it comprises a cup-shaped body (11a) which is rigid and internally defines a first oil containing portion (23a) of said inner variable volume chamber (23), and a bag (25) (41), which is coupled to said cup-shaped body (11a) so as to define a second oil containing portion (23b) of said inner chamber (23) therein, and is structured to deform under the effect of an external pressure (P_{E}), so as to be arranged within said first oil containing portion (23a) of said inner variable volume chamber (23) so as to set said second oil containing portion (23b) to zero and at least partially eject the fluid contained in said first oil containing portion (23a).

2. The tank according to claim 1, wherein said bag (25) is designed to deform between a condition of maximum containment, in which the oil containing volume (Vᵢ) of said variable volume chamber (23) corresponds to the maximum containment volume (V_{M}) of said tank (11) (40), and a condition of minimum containment, in which the oil containing volume (Vᵢ) in said inner variable volume chamber (23) is substantially null.

3. The tank according to claim 2, wherein in the condition of minimum containment, said bag (25) is deformed so as to be arranged resting on the inner face (27) of said cup-shaped body (11a) so as to set the inner oil containing volume (Vᵢ) of said second oil containing portion (23b) to zero.

4. The tank according to any of the preceding claims, wherein said cup-shaped body (11a) has an oil ejection opening (22), which is structured so as to be coupled in a stable although easily releasable manner to said charging station for a refrigerant fluid (8).

5. The tank according to claim 4, wherein said cup-shaped body (11a) comprises a unidirectional valve (26) fitted in said oil ejecting opening (22).

6. The tank according to any of the preceding claims, wherein said cup-shaped body (11a) has an auxiliary oil filling opening (28), and a closing element (29) connected in a stable although easily releasable manner to said opening (28) to allow the addition of oil in said inner variable volume chamber (23).

7. The tank according to any of the preceding claims, wherein in said condition of maximum expansion, said first (23a) and said second oil containing portion (23b) have the same containing volume (Vᵢ).

8. The tank according to any of the preceding claims, wherein said bag (41) is shaped so as to have a bottom portion (42) made of rigid material.

9. The tank according to claim 8, wherein said bottom portion (42) made of rigid material has an upper face (44) shaped so as to have a shape complementary to the upper inner face (27) of said cup-shaped body (11a) so as to be arranged totally resting thereon in the course of the deformation of the bag (41).

10. The tank according to claim 9, wherein said bottom portion (42) made of rigid material is arranged perpendicular to a longitudinal axis (A) of said tank, and is designed to progressively move within said cup-shaped body (11a) so as to reduce the inner volume (Vᵢ) of said variable volume chamber (23).

11. The tank according to claim 10, wherein said bag (41) is shaped so as to have a deformable side portion (43); said bottom portion (42) comprising a disc of rigid material arranged perpendicular to said longitudinal axis (A), which is stably connected to said deformable side portion (43).

12. The tank according to claim 11, wherein said disc made of rigid material is shaped so as to have a radius (R_{d}) less than or equal to the inner radius (Rᵢ) of the first portion (23a) of the variable volume chamber (23).

13. The tank according to any of the preceding claims, comprising a protection container (30), which is coupled to said cup-shaped body (11a) so as to contain said bag (25) (41) therein.

14. The tank according to any of the preceding claims, wherein said inner variable volume chamber (23) has no floating/immersion member for the extraction of said oil therein.

15. A system to charge a refrigerant fluid (1) in a vehicle air-conditioning system (2), comprising a charging station of the refrigerant fluid (8) connected to said vehicle air-conditioning system (2) and provided with a suction/injection circuit (9) for a refrigerant fluid and/or for an oil in a refrigeration circuit (3) of said vehicle air-conditioning system (2) and pumping means (16) operable to vary the pressure of the fluid in said circuit (9) and/or in said refrigeration circuit (3) ;
said system being **characterized in that** it comprises at least one oil containing tank (11) (40) coupled to said suction/injection circuit (9) according to any of the preceding claims.

16. The system according to claim 15, comprising electronic control means (20) configured to control said pumping means (16) so as to create a depression within said suction/injection circuit (9) so as to bring the pressure (P_{I}) of the oil within said inner variable volume chamber (23) to a lower value with respect to the pressure (P_{E}) outside said bag (25) (41) of said tank (11) (40).

17. The system according to claim 16, wherein said oil containing tank (11) (40) is connected to said suction/injection circuit (9) through a duct (9a), and wherein said charging station (8) comprises an oil shut-off device (19) arranged along said duct (9a) so as to open/close said duct (9a) following a command; said electronic control means (20) being structured to control the opening of said oil shut-off device (19) so as to connect said inner variable volume chamber (23) of said oil containing tank (11) (40) to said suction/injection circuit (9) so as to determine a reduction in the pressure (P_{I}) within said inner variable volume chamber (23).

18. A charging station for a refrigerant fluid (8) in a vehicle air-conditioning system (2) comprising a suction/injection circuit (9) for a refrigerant fluid and/or for an oil in a refrigeration circuit (3) of said vehicle air-conditioning system (2); said station being **characterized in that** it comprises at least one oil containing tank (11) (40) coupled to said suction/injection circuit (9) according to any of claims 1 to 14.

## Patentansprüche

1. Behälter (11) (40), der mit einer Beladestation für ein Kältemittelfluid (8) in einem Fahrzeugklimatisierungssystem (2) koppelbar ist, der eine Innenkammer (23) mit variablem Volumen umfasst, die Öl enthält, das dafür bestimmt ist, mit dem Kältemittelfluid vermischt zu werden, das in dem Fahrzeugklimatisierungssystem (2) zirkuliert; wobei der Behälter (11) (40) **dadurch gekennzeichnet ist, dass** er einen becherförmigen Körper (11a), der steif ist und innen einen ersten Ölaufnahmeabschnitt (23) der Innenkammer (23) mit variablem Volumen definiert bzw. begrenzt, und einen Beutel (25) (41), der mit dem becherförmigen Körper (11a) gekoppelt ist, um einen zweiten Ölaufnahmeabschnitt (23b) der Innenkammer (23) darin zu definieren, umfasst, und der derart strukturiert ist, dass er sich unter der Winkung eines Außendrucks (P_{E}) verformt, um innerhalb des ersten Ölaufnahmeabschnitts (23a) der Innenkammer (23) mit variablem Volumen angeordnet zu werden, um den zweiten Ölaufnahmeabschnitt (23a) auf null festzulegen und das in dem ersten Ölaufnahmeabschnitt (23a) enthaltene Fluid wenigstens teilweise auszustoßen.

2. Behälter nach Anspruch 1, wobei der Beutel (25) ausgelegt ist, um sich zwischen einem Zustand der Maximalumhüllung, in dem das Ölaufnahmevolumen (Vᵢ) der Kammer (23) mit variablem Volumen dem maximalen Umhüllungsvolumen (V_{M}) des Behälters (11) (40) entspricht, und einem Zustand der Minimalumhüllung, in dem das Ölaufnahmevolumen (Vᵢ) in der Innenkammer (23) mit variablem Volumen im Wesentlichen null ist, zu verformen.

3. Behälter nach Anspruch 2, wobei der Beutel (25) in dem Zustand der Minimalumhüllung derart verformt ist, dass er auf der Innenseite (27) des becherförmigen Körpers (11a) ruhend angeordnet ist, um das Ölaufnahmevolumen (Vᵢ) des zweiten Ölaufnahmeabschnitts (23b) auf null festzulegen.

4. Behälter nach einem der vorhergehenden Ansprüche, wobei der becherförmige Körper (11a) eine Ölausstoßöffnung (22) hat, die strukturiert ist, um in einer stabilen, aber leicht lösbaren Wiese mit der Beladestation für ein Kältemittelfluid (8) gekoppelt zu werden.

5. Behälter nach Anspruch 4, wobei der becherförmige Körper (11a) ein Rückschlagventil (26) umfasst, das in die Ölausstoßöffnung (22) montiert ist.

6. Behälter nach einem der vorhergehenden Ansprüche, wobei der becherförmige Körper (11a) eine Hilfsölfüllöffnung (28) und ein Schließelement (29) hat, welches in einer stabilen, aber leicht lösbaren Weise mit der Öffnung (28) gekoppelt ist, um das Hinzufügen von Öl in die Innenkammer (23) mit variablem Volumen zuzulassen.

7. Behälter nach einem der vorhergehenden Ansprüche, wobei der erste (23a) und der zweite Ölaufnahmeabschnitt (23b) in dem Zustand maximaler Ausdehnung das gleiche Aufnahmevolumen (Vᵢ) haben.

8. Behälter nach einem der vorhergehenden Ansprüche, wobei der Beutel (41) derart geformt ist, dass er einen Bodenabschnitt (42) hat, der aus steifem Material gefertigt ist.

9. Behälter nach Anspruch 8, wobei der aus steifem Material gefertigte Bodenabschnitt (42) eine Oberseite (44) hat, die derart geformt ist, dass sie eine zu der oberen Innenseite (27) des becherförmigen Körpers (11a) komplementäre Form hat, um im Verlauf der Verformung des Beutels (41) vollständig darauf ruhend angeordnet zu werden.

10. Behälter Anspruch 9, wobei der aus steifem Material gefertigte Bodenabschnitt (42) senkrecht zu einer Längsachse (A) des Behälters angeordnet ist und ausgelegt ist, um sich innerhalb des becherförmigen Körpers (11a) fortschreitend zu bewegen, um das Innenvolumen (Vᵢ) der Kammer (23) mit variablem Volumen zu verringern.

11. Behälter nach Anspruch 10, wobei der Beutel (41) derart geformt ist, dass er einen verformbaren Seitenabschnitt (43) hat; wobei der Bodenabschnitt (42) einen Plattenabschnitt aus steifem Material umfasst, der senkrecht zu der Längsachse (A) angeordnet ist, der stabil mit dem verformbaren Seitenabschnitt (43) verbunden ist.

12. Beutel nach Anspruch 11, wobei die aus steifem Material gefertigte Platte derart geformt ist, dass sie einen Radius (R_{d}) von kleiner oder gleich dem Innenradius (Rᵢ) des ersten Abschnitts (23a) der Kammer (23) mit variablem Volumen hat.

13. Behälter nach einem der vorhergehenden Ansprüche, der ein Schutzgefäß bzw. -container (30) umfasst, der mit dem becherförmigen Körper (11a) gekoppelt ist, um den Beutel (25) (41) darin aufzunehmen.

14. Behälter nach einem der vorhergehenden Ansprüche, wobei die Innenkammer (23) mit variablem Volumen kein Schwimm-/Tauchelement für die Extraktion von Öl darin hat.

15. System zum Laden eines Kältemittelfluids (1) in ein Fahrzeugklimatisierungssystem (2), das eine Beladestation für das Kältemittelfluid (8) umfasst, die mit dem Fahrzeugklimatisierungssystem (2) verbunden ist und mit einem Ansaug-/Einspritzkreis (9) für ein Kältemittelfluid und/oder für ein Öl in einem Kältekreis (3) des Fahrzeugklimatisierungssystems (2) und einem Pumpmittel (10) versehen ist, das betreibbar ist, um den Druck des Fluids in dem Kreis (9) und/oder in dem Kältekreis (3) zu variieren;
wobei das System **dadurch gekennzeichnet ist, dass** es wenigstens einen Ölaufnahmebehälter (11) (40) nach einem der vorhergehenden Ansprüche umfasst, der mit dem Ansaug-/Einspritzkreis (9) gekoppelt ist.

16. System nach Anspruch 15, das ein elektronisches Steuermittel (20) umfasst, das aufgebaut ist, um das Pumpmittel (16) zu steuern, um einen Unterdruck in dem Ansaug-/Einspritzkreis (9) zu erzeugen, um den Druck (Pₗ) des Öls innerhalb der Innenkammer (23) mit variablem Volumen in Bezug auf den Druck (P_{E}) außerhalb des Beutels (25) (41) des Behälters (11) (40) auf einen niedrigeren Wert zu bringen.

17. System nach Anspruch 16, wobei der Ölaufnahmebehälter (11) (40) durch einen Kanal (9a) mit dem Ansaug-/Einspritzkreis (9) verbunden ist, und wobei die Beladestation (8) eine Ölabsperrvorrichtung (19) umfasst, die entlang des Kanals (9a) angeordnet ist, um den Kanal (9a) einem Befehl folgend zu öffnen/zu schließen; wobei das elektronische Steuermittel (20) strukturiert ist, um das Öffnen des Ölabsperrventils (19) zu steuern, um die Innenkammer (23) mit variablem Volumen des Ölaufnahmebehälters (11) (40) mit dem Ansaug-/Einspritzkreis (9) zu verbinden, um eine Verringerung des Drucks (P_{I}) innerhalb der Innenkammer (23) mit variablem Volumen zu bestimmen.

18. Beladestation für ein Kältemittelfluid (8) in einem Fahrzeugklimatisierungssystem (2), das einen Ansaug-/Einspritzkreis (9) für ein Kältemittelfluid und/oder für ein Öl in einem Kältekreis (3) des Fahrzeugklimatisierungssystems (2) umfasst; wobei die Station **dadurch gekennzeichnet ist, dass** sie wenigstens einen Ölaufnahmebehälter (11) (40) nach einem der Ansprüche 1 bis 14 umfasst, der mit dem Ansaug-/Einspritzkreis (9) gekoppelt ist.

## Revendications

1. Réservoir (11) (40) pouvant être raccordé à une station de charge pour un fluide réfrigérant (8) dans un système de climatisation (2) de véhicule, comprenant une chambre intérieure (23) à volume variable contenant de l'huile destinée à être mélangée avec le fluide réfrigérant qui circule dans ledit système de climatisation (2) de véhicule ; ledit réservoir (11) (40) étant **caractérisé en ce qu'**il comprend un corps en forme de bol (11a) qui est rigide et qui délimite intérieurement une première partie (23 a) contenant de l'huile de ladite chambre intérieure (23) à volume variable, et **en ce qu'**il comprend une poche (25) (41) reliée au dit corps en forme de bol (11a) afin de délimiter à l'intérieur de celle-ci une deuxième partie (23b) contenant de l'huile de ladite chambre intérieure (23), et structurée pour être déformée sous l'effet d'une pression extérieure (P_{E}), afin d'être disposée à l'intérieur de ladite première partie (23 a) contenant de l'huile de ladite chambre intérieure (23) à volume variable de manière à régler sur zéro ladite deuxième partie (23b) contenant de l'huile et à éjecter au moins partiellement le fluide contenu dans ladite première partie (23 a) contenant de l'huile.

2. Réservoir selon la revendication 1, dans lequel ladite poche (25) est destinée à se déformer entre un état de confinement maximal, dans lequel le volume (Vᵢ) contenant de l'huile de ladite chambre (23) à volume variable correspond au volume maximal (V_{M}) de confinement dudit réservoir (11) (40) et un état de confinement minimal, dans lequel le volume (Vᵢ) contenant de l'huile dans ladite chambre intérieure (23) à volume variable est sensiblement nul.

3. Réservoir selon la revendication 2, dans lequel dans l'état de confinement minimal, ladite poche (25) est déformée afin de reposer sur la surface intérieure (27) dudit corps en forme de bol (11a) de manière à régler sur zéro le volume intérieur (Vᵢ) contenant de l'huile de ladite deuxième partie (23b) contenant de l'huile.

4. Réservoir selon l'une quelconque des revendications précédentes, dans lequel ledit corps en forme de bol (11a) dispose d'une ouverture d'éjection (22) d'huile qui est structurée de manière à être reliée d'une façon stable quoique facilement amovible à ladite station de charge pour un fluide réfrigérant (8).

5. Réservoir selon la revendication 4, dans lequel ledit corps en forme de bol (11a) comprend une valve unidirectionnelle (26) emboîtée dans ladite ouverture d'éjection (22) d'huile.

6. Réservoir selon l'une quelconque revendications précédentes, dans lequel ledit corps en forme de bol (11a) dispose d'une ouverture de remplissage (28) d'huile auxiliaire, et un élément de fermeture (29) relié d'une façon stable quoique facilement amovible à ladite ouverture (28) pour permettre l'ajout d'huile dans ladite chambre intérieure (23) à volume variable.

7. Réservoir selon l'une quelconque des revendications précédentes, dans lequel dans ledit état de dilatation maximal, ladite première partie (23a) et ladite deuxième partie (23b) contenant de l'huile possèdent la même contenance volumique (Vᵢ).

8. Réservoir selon l'une quelconque des revendications précédentes, dans lequel ladite poche (41) est formée de manière à avoir une partie inférieure (42) fabriquée dans un matériau rigide.

9. Réservoir selon la revendication 8, dans lequel ladite partie inférieure (42) fabriquée dans un matériau rigide possède une surface supérieure (44) formée de manière à avoir une forme complémentaire à la surface supérieure interne (27) dudit corps en forme de bol (11a) de manière à reposer entièrement sur ladite surface dudit corps au cours de la déformation de la poche (41).

10. Réservoir selon la revendication 9, dans lequel ladite partie inférieure (42) fabriquée dans un matériau rigide est disposée perpendiculairement à l'axe longitudinal (A) dudit réservoir, et est destinée à se déplacer progressivement dans ledit corps en forme de bol (11a) de manière à réduire le volume intérieur (Vᵢ) de ladite chambre intérieure (23) à volume variable.

11. Réservoir selon la revendication 10, dans lequel ladite poche (41) est formée de manière à avoir une partie latérale (43) déformable ; ladite partie inférieure (42) comprenant un disque fabriqué dans un matériau rigide disposé perpendiculairement au dit axe longitudinal (A), qui est relié de façon stable à ladite partie latérale (43) déformable.

12. Réservoir selon la revendication 11, dans lequel ledit disque fabriqué dans un matériau rigide est formé de manière à avoir un rayon (R_{d}) inférieur ou égal au rayon interne (Rᵢ) de la première partie (23a) de la chambre (23) à volume variable.

13. Réservoir selon l'une quelconque des revendications précédentes, comprenant un récipient de protection (30), qui est relié audit corps en forme de bol (11 a) de manière à contenir dans ledit corps ladite poche (25) (41).

14. Réservoir selon l'une quelconque des revendications précédentes, dans lequel la chambre intérieure (23) à volume variable ne possède pas à l'intérieur d'élément flottant/d'immersion pour l'extraction de ladite huile.

15. Système pour charger un fluide réfrigérant (1) dans un système de climatisation (2) de véhicule comprenant une station de charge du fluide réfrigérant (8) reliée audit système de climatisation (2) de véhicule et munie d'un circuit (9) d'aspiration/d'injection pour un fluide réfrigérant et/ou pour une huile dans un circuit de réfrigération (3) dudit système de climatisation (2) de véhicule et des moyens de pompage (16) fonctionnant de manière à faire varier la pression du fluide dans ledit circuit (9) et/ou dans ledit circuit de réfrigération (3) ;
ledit système étant **caractérisé en ce qu'**il comprend au moins un réservoir (11) (40) contenant de l'huile relié audit circuit (9) d'aspiration/d'injection selon l'une quelconque des revendications précédentes.

16. Système selon la revendication 15, comprenant des moyens (20) de commande électronique conçus pour commander lesdits moyens (16) de pompage de manière à créer une dépression dans ledit circuit (9) d'aspiration/d'injection afin d'amener la pression (P_{I}) de l'huile à l'intérieur de ladite chambre intérieure (23) à volume variable à une valeur inférieure par rapport à la pression (P_{E}) à l'extérieur de ladite poche (25) (41) dudit réservoir (11) (40).

17. Système selon la revendication 16, dans lequel le réservoir (11) (40) contenant l'huile est relié audit circuit (9) d'aspiration/d'injection par le biais d'un conduit (9a) et dans lequel ladite station de charge (8) comprend un dispositif (19) de coupure d'huile le long dudit conduit (9a) de manière à ouvrir/fermer ledit conduit (9a) en suivant une instruction ; lesdits moyens (20) de commande électronique étant structurés pour commander l'ouverture dudit dispositif (19) de coupure d'huile de manière à relier ladite chambre intérieure (23) à volume variable dudit réservoir (11) (40) contenant l'huile audit circuit (9) d'aspiration/d'injection afin de déterminer une baisse de la pression (Pₗ) à l'intérieur de ladite chambre intérieure (23) à volume variable.

18. Station de charge pour un fluide réfrigérant (8) dans un système de climatisation (2) de véhicule comprenant un circuit (9) d'aspiration/d'injection pour un fluide réfrigérant et/ou pour une huile dans un circuit (3) de réfrigération dudit système de climatisation (2) de véhicule ; ladite station étant **caractérisée en ce qu'**elle comprend au moins un réservoir (11) (40) contenant de l'huile relié audit circuit (9) d'aspiration/d'injection selon l'une quelconque des revendications 1 à 14.
